# EUROPEAN PATENT APPLICATION

(11) **EP 1 348 369 A1**
(43) Date of publication of application: **01.10.2003**
(21) Application number: 03075809.8
(22) Date of filing: 20.03.2003
(51) Int. Cl.: A47J 43/24

(54) **Colander with reduced dimensions**

(30) Priority: 29.03.2002 IT MI20020663
(71) Applicant: DMS Distribution + Marketing-Service AG, 8108 Dällikon (CH)
(72) Inventor: Leonori, Luca, 00187 Rome (IT)
(74) Representative: Martegani, Franco

(57) **Abstract**

A colander with reduced dimensions (10) comprising a casing in the form of a spherical bowl, the lower part of which is provided with a series of small through holes (22) designed for drainage. According to the invention, said colander includes a first casing (20) in the form of a spherical bowl and a second casing (30) in the form of a spherical segment with two bases, an upper circular rim (26) of the spherical bowl of said first casing (20) being connected in correspondence with a lower base of the spherical segment with two bases of said second casing (30) by removable fixing means (24, 28, 29, 34) between said first (20) and said second casing (30).

## Description

The present invention relates to a colander with reduced dimensions.

Colanders of different sizes and forms are found in the household goods sector, naturally designed to separate the water used in a cooking pan from the pasta.

As known in the art, these objects are generally casings in the form of spherical bowls with a series of small holes, in the concave part of which the foodstuff collects while the water drains through these small holes.

Colanders, usually made of stainless steel or plastic, also have supporting means such as feet, usually three, which allow them to be placed on a surface of a kitchen sink for the draining operation.

Moreover, or alternatively, they may have other supporting means such as a handle to support the colander over a sink while pouring the content of a cooking pan.

However, these colanders with their spherical form have considerable dimensions, and therefore a certain amount of space is required to place them in a cupboard.

The general object of the present invention is to produce a colander with reduced dimensions which allow it to be stored, when not in use, in a minimum space.

Another object is to solve the aforesaid drawbacks of prior art in an extremely simple, inexpensive and particularly functional manner.

In view of the aforesaid objects, the purpose of the present invention is to produce a colander with reduced dimensions, with the characteristics set forth in the attached claims.

The structural and functional characteristics of the present invention and its advantages in relation to prior art shall become clearer and more evident by examining the following description, with reference to the attached drawings, which show a colander with reduced dimensions produced according to the innovative principles of the invention.

In the drawings:
- Figure 1 shows an axonometric projection of a colander according to the invention, in a draining position;
- Figure 2 is a median section in a side elevation of Figure 1;
- Figure 3 shows an axonometric projection of the colander in Figure 1, in a position with reduced dimensions, where a first casing in the form of a spherical bowl can be seen internally and a second casing in the form of a spherical segment with two bases can be seen externally;
- Figure 4 is a median section in a side elevation of Figure 3;
- Figure 5 shows a top plan view of the first casing in the form of a spherical bowl of Figure 3;
- Figure 6 is a side elevation view of Figure 5;
- Figure 7 shows a top plan view of the second casing in the form of a spherical bowl of Figure 3;
- Figure 8 is a median section in a side elevation of Figure 7, taken according to the trace line VIII-VIII of Figure 7.

With reference to the drawings, a colander with reduced dimensions according to the present invention, is indicated as a whole with 10, and in the example shown according to the present invention, has at least two casings 20 and 30.

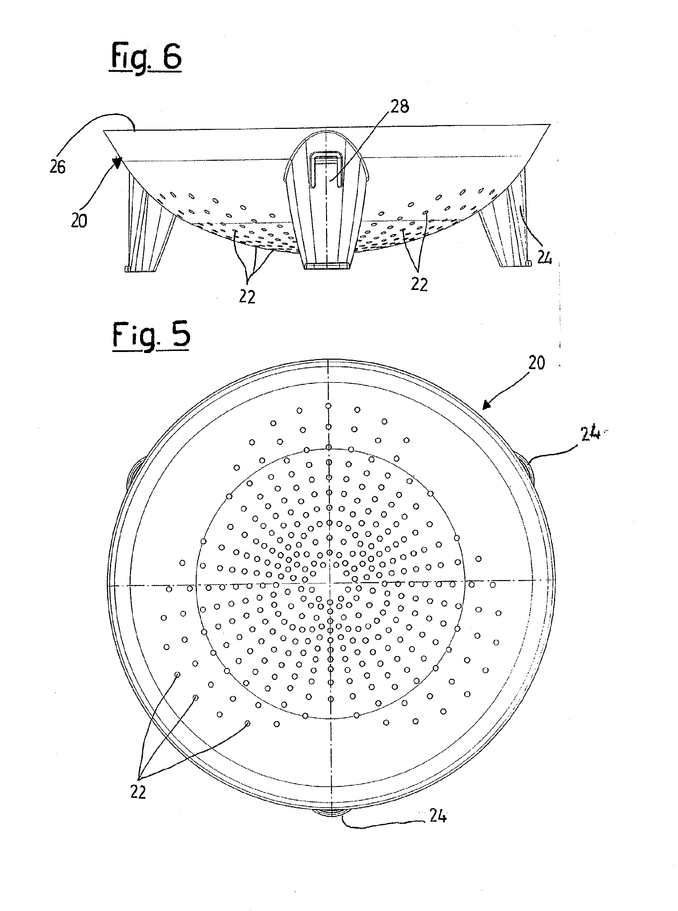

Figures 5 and 6 show a first casing 20, which is in the form of a spherical bowl and constitutes a lower part of the colander 10 in the draining position.

This casing 20 has a series of small through holes 22 designed for drainage.

The first casing 20 is also provided with feet 24 for resting on a surface on which drainage can take place, for example the surface of a kitchen sink. The feet 24 are, in the non-limiting example shown in the figures, three in number and are positioned equidistantly from one another.

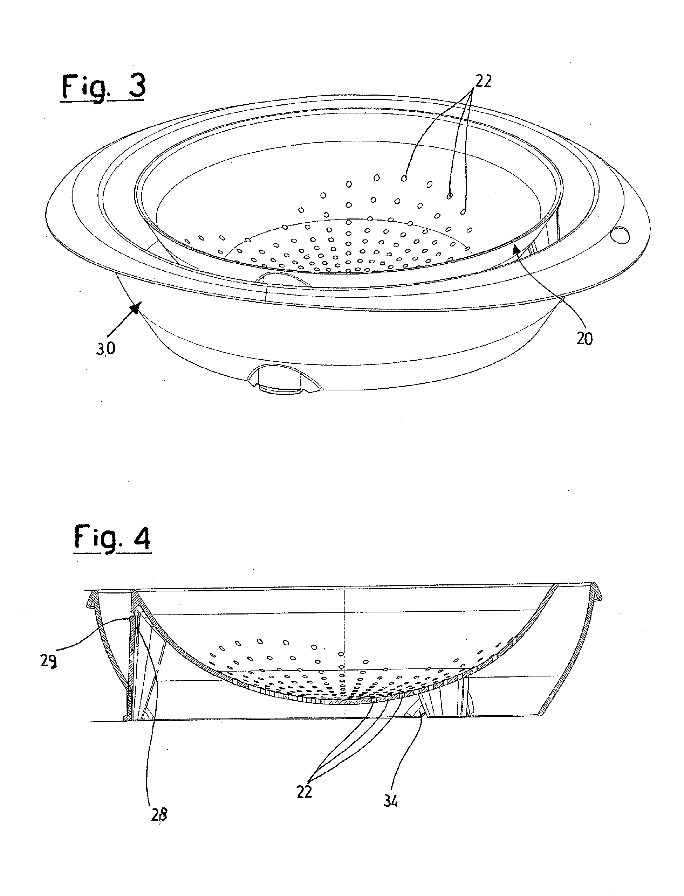

In figure 4 the feet 24 have a cylindrical surface portion, with an axis parallel to the axis of the spherical bowl of the first casing 20 and which starts from an upper circular rim 26 of said bowl.

Each foot 24 is provided with a tab 28 with an element 29 projecting laterally towards the outside of the first casing 20.

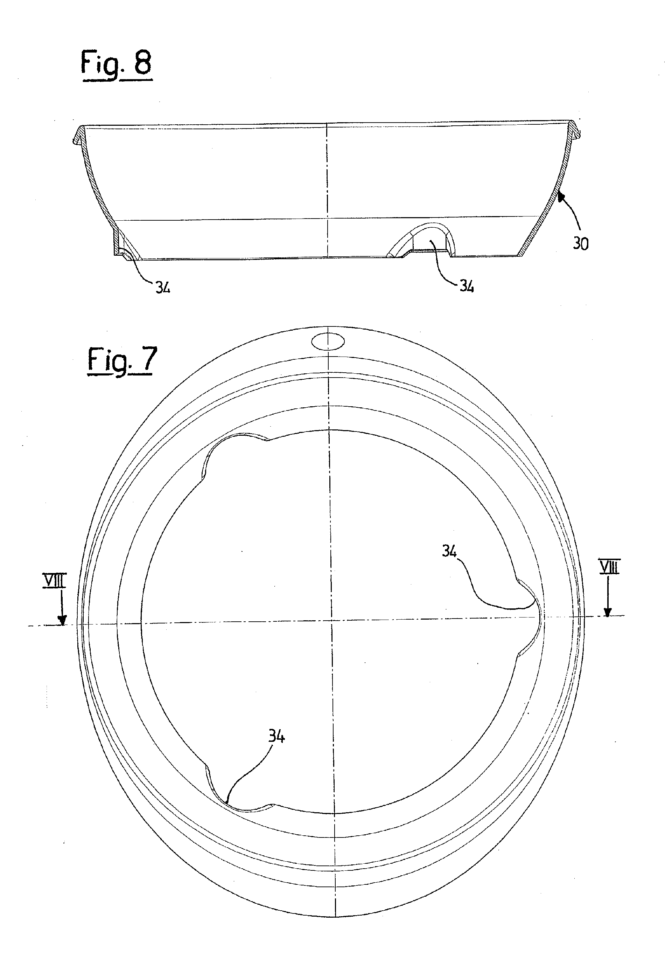

Figures 7 and 8 show a second casing 30, which is in the form of spherical segment with two bases and constitutes an upper part of the colander 10 in the draining position.

The spherical segment of the second casing 30 has an internal radius slightly larger than the external radius of the spherical bowl of the first casing 20.

Moreover, the lower base of the spherical segment with two bases of the second casing 30 is smaller than the base of the spherical bowl of the first casing 20.

In correspondence with the feet 24 of the first casing 20, guides 34 are produced on the second casing 30 for said feet 24. In the non-limiting example shown in the figures, the guides 34 are three in number and are positioned equidistantly from one another.

In Figure 4 the guides 34 comprise a portion of cylindrical surface, the axis of which is parallel to the axis of the spherical segment of the second casing 30 and which has a slightly larger internal radius than the external radius of the cylindrical portion of the feet 24.

Operation of the colander with reduced dimensions according to the invention is clear from the preceding description with reference to the figures, and is described briefly below.

The second casing 30 is fitted around the first casing 20, so that the respective axes, of the spherical segment with two bases and of the spherical bowl, coincide with each other.

More precisely, the feet 24 of the first casing 20 are positioned in correspondence with the guides 34 of the second casing 30 and are thus inserted in said guides 34.

At this point the colander 10 is assembled, the second casing 30 being able to slide axially on the first casing 20.

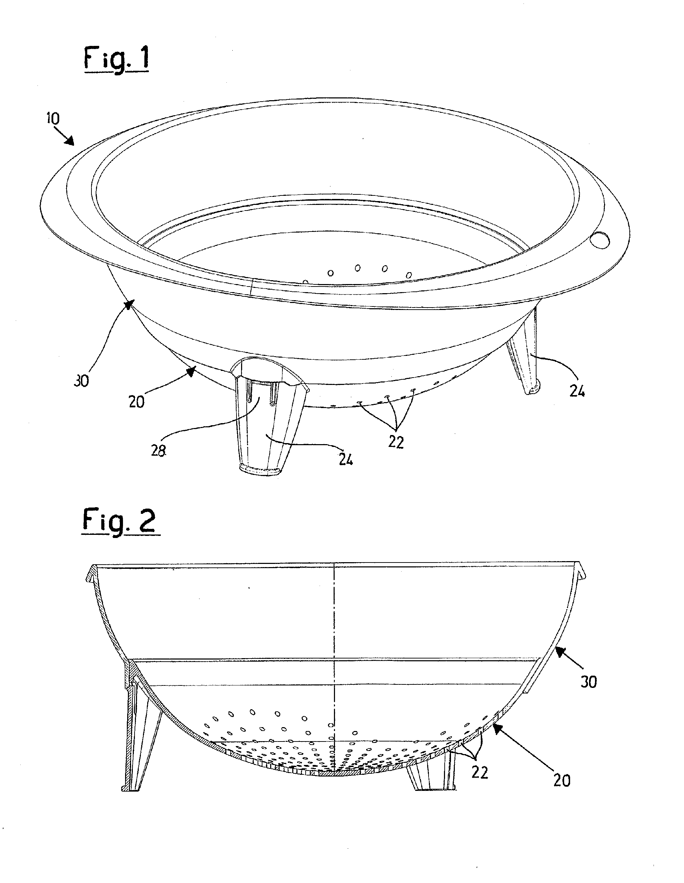

In practice, two relative positions between first 20 and second 30 casing are relevant: a draining position, shown in Figure 1, and a position with reduced dimensions, shown in Figure 3.

In the draining position shown in Figures 1 and 2, bearing in mind what has been said concerning the dimensions of the internal radius and of the lower base of the spherical segment with two bases of the second casing 30, it must be noted how a lower part of the second casing 30 covers an upper part of the first casing 20 in a relatively accurate manner, preventing substantial leakage of water.

If pressed, the tabs 28 of the feet 24 can bend so as to bring the projecting elements 29 towards the inside of the bowl of the first casing 20, returning to an initial position at rest in the absence of external forces.

In practice, as shown in Figure 2, when the colander 10 is in the draining position the projecting elements 29 of the tabs 28 engage at a lower end of the guides 34 to prevent the second casing 30 from sliding downward, thus producing removable fixing means between first 20 and second casing 30 and thus allowing the colander 10 to be used for drainage.

By instead exerting a certain pressure downward on the second casing 30, and if necessary also pressing the tabs 28 towards the inside of the first casing 20, the projecting elements 29 are disengaged from the second casing 30, allowing it to slide downwards to the position shown in figure 4.

The colander 10 of the present invention in another embodiment not shown in the figures may have no feet 24 and be provided with an elongated maneuvering handle, being provided in any case with removable fixing means between a first casing 20, in the form of a spherical bowl, and a second casing 30, in the form of a spherical segment with two bases.

It is thus emphasized how, with the colander 10 of the present invention, it is possible to obtain a reduction in the height occupied by a prior art colander, with the analogous dimensions in the draining phase. In the non-limiting example shown in figure 4, this reduction is of around half.

To attain greater reductions, it will be necessary to divide the second casing 30, in the form of a spherical segment with two bases, for example into two parts, connected in an analogous way as described with reference to the connection between the first 20 and the second casing 30 shown in the figures.

Furthermore, it is emphasized that the axis of the cylinders of the feet 24 and of the guides 34 may also not be parallel to the axis of the casings 20 and 30, as long as they have axes substantially parallel to one another.

It is specified that the colander 10 of the present invention is advantageously produced in plastic material.

From the preceding description with reference to the figures, it is evident how a colander with reduced dimensions according to the invention is particularly useful and advantageous. The objects mentioned in the preamble of the description are thus attained.

Naturally, the forms of the colander with reduced dimensions may vary from those shown purely as a non-limiting example in the drawings, as may the materials and removable fixing systems differ.

The scope of protection of the invention is thus delimited by the attached claims.

## Claims

1. Colander with reduced dimensions (10) of the type comprising a casing in the form of a spherical bowl, the lower part of which is provided with a series of small through holes (22) designed for drainage, **characterized in that** it comprises a first casing (20) in the form of a spherical bowl and a second casing (30) in the form of a spherical segment with two bases, an upper circular rim (26) of the spherical bowl of said first casing (20) being connected in correspondence with a lower base of the spherical segment with two bases of said second casing (30) by removable fixing means (24, 28, 29, 34) between said first (20) and said second casing (30).

2. Colander (10) as claimed in claim 1, **characterized in that** the spherical segment of said second casing (30) has a slightly larger internal radius than the external radius of the spherical bowl of said first casing (20).

3. Colander (10) as claimed in claim 1, **characterized in that** said lower base of the spherical segment with two bases of said second casing (30) is smaller than the area determined by said upper circular rim (26) of the spherical bowl of said first casing (20).

4. Colander (10) as claimed in claim 1, **characterized in that** said first casing (20) is provided with supporting feet (24) positioned equidistantly from one another.

5. Colander (10) as claimed in claim 4, **characterized in that** guides (34) for said feet (24) are produced on said second casing (30) in correspondence with said feet (24) of said first casing (20).

6. Colander (10) as claimed in claim 5, **characterized in that** said feet (24) each comprise a cylindrical surface portion and **in that** said guides (34) each comprise a cylindrical surface portion with a slightly larger internal radius than the external radius of the cylindrical surface portion of said feet (24), the axes of the cylindrical surface portions of said feet (24) being assembled coinciding with the axes of the cylindrical surface portions of said guides (34).

7. Colander (10) as claimed in claim 6, **characterized in that** said axes of said feet (24) and of said guides (34) are parallel to the axis of said assembled colander (10).

8. Colander (10) as claimed in claim 6, **characterized in that** said removable fixing means (24, 28, 29, 34) comprise tabs (28) produced on said feet (24).

9. Colander (10) as claimed in claim 8, **characterized in that** said tabs (28) are provided with an element (29) projecting laterally towards the outside of said first casing (20), said projecting elements (29) engaging at lower ends of said guides (34).

10. Colander (10) as claimed in claim 9, **characterized in that** said tabs (28) of said feet (24) bend when pressed so as to bring said projecting elements (29) towards the inside of the spherical bowl of said first casing (20), returning to an initial position at rest in the absence of external forces.

11. Colander (10) as claimed in claim 1, **characterized in that** it comprises at least an elongated maneuvering handle.

12. Colander (10) as claimed in claim 1, **characterized in that** said second casing (30) is divided into several parts connectable through removable fixing means.

13. Colander (10) as claimed in claim 1, **characterized in that** it is produced in plastic material, metal, or partly in plastic material and partly in metal.

14. Colander (10) as claimed in claim 4, **characterized in that** said feet (24) are three in number.
